# FASCICULE DE BREVET EUROPEEN

(11) **EP 0 683 350 B1**
(45) Date de publication et mention de la délivrance du brevet: **28.07.1999**
(21) Numéro de dépôt: 95401134.2
(22) Date de dépôt: 16.05.1995
(51) Int. Cl.: F16M 11/04

(54) **Dispositif de fixation de caméras sur un trépied**
Vorrichtung zum Befestigen von Kameras auf einem Dreibeinstativ
Device for securing cameras to a tripod

(30) Priorité: 17.05.1994 FR 9405988
(43) Date de publication de la demande: 22.11.1995
(73) Titulaire: THOMSON BROADCAST, 95801 Cergy-Saint-Christophe (FR)
(72) Inventeur: Lopez, René Serge, F-92050 Paris la Defense (FR)
(74) Mandataire: Zhang, Jianguo

(56) Documents cités:
- US-A- 2 966 107
- US-A- 3 416 822
- US-A- 3 693 921

## Description

La présente invention concerne un dispositif de fixation d'un appareil sur un support quelconque, et plus particulièrement un dispositif permettant la fixation aisée d'une caméra sur un trépied.

Dans le domaine de la télévision professionnelle, les utilisateurs de caméras doivent pouvoir porter celles-ci à l'épaule, comme pouvoir les fixer rapidement et facilement sur un trépied ou sur d'autres supports. Les systèmes de fixation doivent par ailleurs être parfaitement surs afin de ne pas risquer d'endommager les caméras qui restent lourdes, complexes, fragiles et coûteuses.

Les systèmes de fixation actuellement utilisés sont en général constitués de deux points de verrouillage avant et arrière, cela étant dû au nécessaire épaulement de la caméra qui doit pouvoir être utilisée à l'épaule. Celle-ci, manipulée par l'utilisateur sur le dispositif de fixation est guidée par des rails sur le point de verrouillage avant, la butée en bout de rail de la caméra déclenchant le verrouillage avant dans le plan horizontal. Le point arrière, en général monté sur ressort, doit venir assurer le verrouillage dans le plan vertical de la caméra. Certains systèmes de verrouillage de caméras actuellement utilisés comportent une incertitude sur le verrouillage avant (caméra non enclenchée en bout de rails) et arrière (difficulté de vérifier si celui-ci s'est bien enclenché). Un mauvais verrouillage peut avoir bien entendu de fâcheuses conséquences sur le matériel et les personnes utilisatrices. D'autre part, les systèmes de verrouillage actuels peuvent être déverrouillés alors que la caméra est toujours en position sur le trépied. Cela peut aussi être source d'accidents.

Un dispositif de fixation d'appareil sur un support est décrit dans le brevet US-A-3 416 822.

La présente invention permet de s'affranchir de ces graves inconvénients et consiste en un dispositif de verrouillage rapide, sûr, simple, s'enclenchant systématiquement, solide, facile à manipuler, simple à fabriquer et peu onéreux.

En effet, la présente invention concerne un dispositif de fixation d'un appareil sur un support, en particulier d'une caméra sur un trépied, comportant deux points de fixation et deux pièces fixées sur l'appareil que viennent verrouiller ces points de fixation, et est caractérisé en ce que le verrouillage est déclenché par deux boutons-poussoirs (ou interrupteurs) solidaires de la semelle lorsqu'ils sont tous les deux en position enfoncée par le seul poids de la caméra. Cette semelle peut être, par ailleurs, fixée sur le support d'une manière classique et enfoncés simultanément par le seul poids de l'appareil. Deux doigts de verrouillage avant et arrière solidaires entre eux et montés sur ressort, coulissent alors en même temps pour venir épouser la forme des griffes de maintien fixées sur l'appareil. La forme particulière de ces poussoirs (pièces montées sur ressorts et ayant différents diamètres) permet le blocage du système en position de déverrouillage lorsque l'appareil est retiré de la semelle, et le verrouillage lorsqu'ils sont enfoncés.

L'invention concerne un dispositif de fixation d'un appareil sur un support, ledit dispositif comprenant une semelle fixée au support, deux doigts de verrouillage et deux poussoirs permettant de déclencher la fixation de l'appareil sur le support par l'intermédiaire des doigts de verrouillage. Chacun des deux poussoirs est un pion cylindrique de section cirulaire monté sur ressort, comportant au moins deux diamètres différents et dont la génératrice est perpendiculaire au plan de la semelle.

Le système permettant le déverrouillage consiste à faire coulisser manuellement le système rigide monté sur ressorts comprenant les doigts de verrouillage de manière à ce que les griffes de maintien de l'appareil soient dégagées et de retirer l'appareil afin que les poussoirs reviennent à leur position de blocage du déverrouillage.

Ainsi, ce dispositif offre une grande sécurité puisqu'il ne peut fonctionner que si les deux interrupteurs sont enfoncés simultanément. Le verrouillage s'effectue facilement par le seul poids de l'appareil et le système de déverrouillage interdit que le dispositif ne soit déverrouillé alors que l'appareil est posé sur la semelle.

La présente invention sera mieux comprise et des avantages supplémentaires apparaîtront à la lecture de la description qui va suivre illustrée par les figures ci-dessous représentant un exemple de réalisation, conformément à la présente invention, un dispositif de fixation d'une caméra sur un trépied :
La figure 1 représente une partie du dispositif de fixation en position verrouillée ;
La figure 2 représente une vue en coupe d'un des boutons-poussoirs déclenchant le système de verrouillage ;
La figure 3 représente le système de coopération entre le point de fixation avant et le point de fixation arrière du dispositif en position déverrouillée.

L'exemple de réalisation de l'invention illustré par les figures, concerne une caméra à fixer sur un trépied, mais il est bien évident que l'invention peut être utilisée pour la fixation de tous types d'appareils sur tous types de supports.

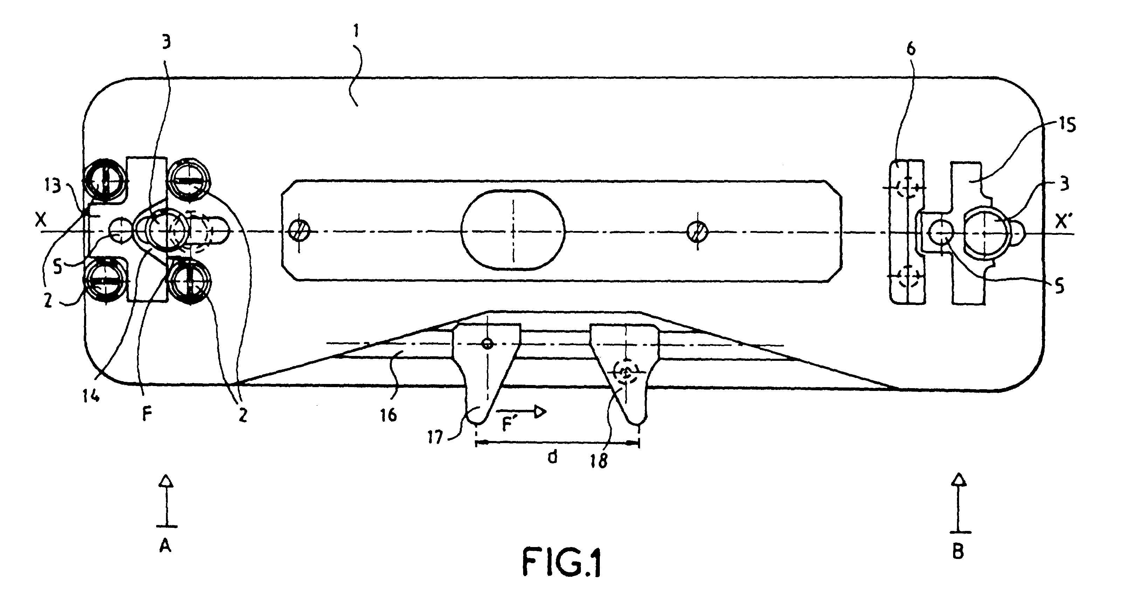

Le mode de réalisation de la figure 1 est constitué d'une semelle 1 ou support du dispositif de fixation, comportant une partie des éléments du dispositif de fixation selon l'invention, l'autre partie étant portée par la caméra. Cette semelle 1 comporte sur son secteur avant A plusieurs moyens 2 fixes par rapport à la semelle 1, permettant le centrage et le calage horizontal et latéral de la caméra dans le plan de la semelle 1. Ces moyens de centrage 2 sont de préférence des pions chanfreinés au nombre de quatre, mais peuvent être n'importe quel autre type de moyen de centrage. Le secteur avant A de la semelle 1 comporte d'autre part un doigt de verrouillage 3 et qui coulisse selon l'axe xx' de la semelle 1 lorsque le verrouillage est déclenché par pression sur les deux boutons-pressoirs avant et arrière 5. Avantageusement, le doigt de verrouillage 3 est biseauté afin de faciliter le contact avec la partie correspondante de la caméra et le maintien de celle-ci sur la semelle.

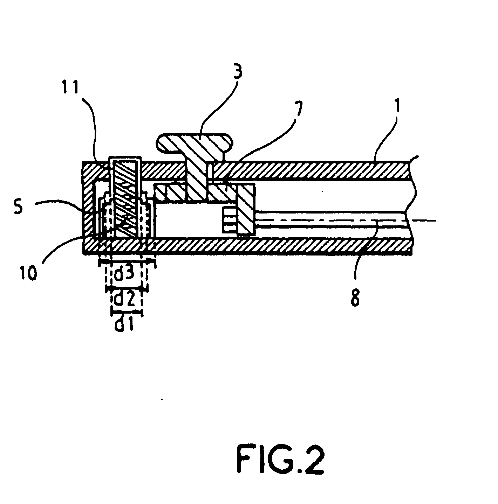

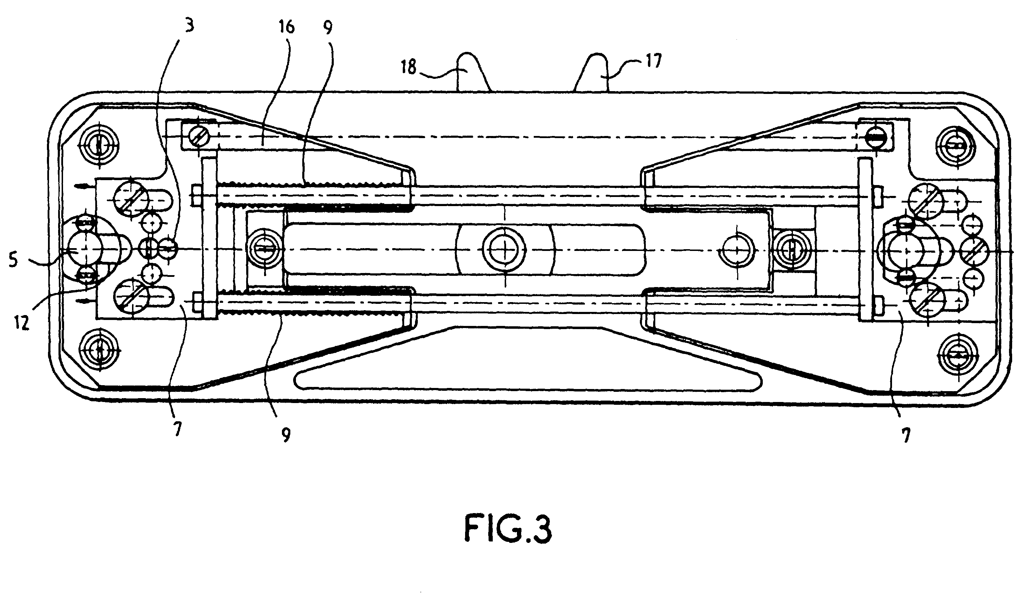

Le verrouillage déclenché par pression simultanée sur les deux boutons-pressoirs 5 constitue une des caractéristiques importantes de l'invention. En effet, la semelle 1 comporte deux poussoirs 5 déclenchant le verrouillage des points de fixation avant et arrière, ce dernier consistant en un doigt de verrouillage 3 du même type que le point de fixation avant. Ce secteur arrière B de la semelle 1 comporte aussi un poussoir 5 du même type que celui équipant le secteur avant A, et une butée 6 latérale qui permet le centrage sur le dispositif de verrouillage de la partie arrière de la caméra qui comporte une partie évidée correspondante. Afin de réaliser cette liaison entre le point de verrouillage avant et le point de verrouillage arrière, les deux doigts de verrouillage 3 sont fixés chacun sur deux pièces intermédiaires 7 du type équerre, elles même reliées entre elles par deux tringles 8 montées sur ressort 9. Comme représenté sur les figures 2 et 3, le verrouillage de cet ensemble est assuré par l'enfoncement simultanée des poussoirs 5.

Ces poussoirs 5 sont déclenchés par le poids de la caméra que l'utilisateur pose sur la semelle 1. Comme cela est représenté par l'exemple de la figure 2, ces poussoirs sont constitués par un pion comportant différents diamètres, d1, d2 et d3, le diamètre d2 étant facultatif. En position déverrouillé, c'est-à-dire lorsque la caméra n'est pas posée sur la semelle 1, les pions 5 montés sur ressort 10 dépassent à l'extérieur de la semelle 1 au travers d'un jour 11 dont le diamètre est supérieur au petit diamètre d1 des pions 5 mais inférieur au diamètre d2 de ces mêmes pions afin que ceux-ci viennent buter sur la semelle. Les équerres 7 sur lesquelles sont fixées les doigts de verrouillage 3, elles-mêmes montées sur ressort 9, comporte chacune une échancrure 12 dont la profondeur est au moins égale à la course nécessaire pour que le doigt 3 vienne bloquer la caméra, et dont la largeur est inférieure au diamètre d3 des poussoirs 5, mais supérieure au deux autres diamètres d1 et d2. Le système bandé par les ressorts 9 est ainsi calé par la base des poussoirs 5 de diamètre d3. Lorsque la caméra est posée sur la semelle 1, elle est guidée et centrée par les pions 2 et la butée de centrage 6, son poids enfonce les interrupteurs 5 sur leurs ressorts 10, et le diamètre des poussoirs 5 vus par les échancrures 12 des équerres 7 étant inférieur à la largeur de cette échancrure 12, le système rigide des équerres 7 liées entre elles par les tringles 8 et supportant les doigts de verrouillage 3 poussé par les ressorts 9, coulisse vers l'avant selon la flèche F et les deux doigts de verrouillage 3 viennent au contact des pièces correspondantes de la caméra permettant le maintien de celle-ci sur la semelle.

Les poussoirs 5 peuvent être creux afin de loger le ressort de compression.

Sur la figure 1 sont représentées les deux pièces 13 et 15 fixé à la caméra et coopérant avec les doigts de verrouillage 3, par souci de clarté la caméra n'a pas été représentée.

La caméra est équipée sur sa face inférieure en contact avec la semelle 1 d'une pièce avant centreuse 13 (ou griffe) comportant un logement 14 (ou cavité) que va épouser la forme épaulée du doigt de verrouillage avant 3 lorsque celui-ci va coulisser pour le verrouillage. De même, la pièce arrière 15 de la caméra en contact avec le point de verrouillage arrière a une forme qui épouse l'épaulement du doigt de verrouillage arrière 3. Ainsi, pour que les verrouillages soient déclenchés, il faut que la caméra soit complètement plaquée sur la semelle et appuie sur les deux poussoirs 5, cela élimine les risques d'un verrouillage partiel. En effet, la pression sur un seul des deux poussoirs 5 ne permet pas le déclenchement du verrouillage puisqu'un des poussoirs reste en position déverrouillée et bloque l'ensemble rigide équerres/tringles/doigts de déverrouillage. Le fait de ne pas faire glisser la caméra pour déclencher le verrouillage comme dans les solutions de l'art antérieur, mais d'avoir simplement à la poser - le centrage et le verrouillage s'effectuant automatiquement grâce aux pions 2 et par le seul poids de la caméra - évite tous risques de rayures ou de chocs sur la caméra. Cette fixation peut être effectuée en aveugle puisque la caméra est guidée naturellement par les pions de centrage et la butée et que le système de verrouillage ne se déclenche pas tant que le centrage n'est pas réalisé.

Une autre caractéristique importante de l'invention concerne le système de déverrouillage permettant de retirer la caméra de la semelle fixée au support. Comme représenté sur la figure 3, une troisième tringle 16 (qui peut aussi être simplement une des tringles 8 de maintien des deux équerres 7) relie les deux équerres 7. Sur cette troisième tringle 16 est fixée une première prise 17, une seconde prise 18 étant fixée à la semelle. Ainsi, pour retirer la caméra de la semelle 1, l'utilisateur fait coulisser vers l'arrière en compressant les ressorts 9, les équerres 7 grâce à la tringle 16 en rapprochant les deux prises 17 et 18, et libère les griffes 13 et 15 de la caméra des deux doigts de verrouillage 3 avant et arrière. Les boutons-poussoirs 5 libérés des échancrures 12, sont alors poussés vers le haut par leurs ressorts 10 et viennent bloquer les équerres 7 et donc les doigts de verrouillage 3 dans la position de déverrouillage. Les éléments de préhension 17 et 18 du système de déverrouillage sont espacées d'une distance d permettant leur manipulation avec deux doigts, l'autre main pouvant être utilisée pour dégager la caméra de la semelle.

Un des avantages de ce système de déverrouillage selon l'invention est que tant que la caméra n'est pas retirée de la semelle 1, les poussoirs 5 ne peuvent être en position de déverrouillage du fait du poids de la caméra, le système ne peut donc pas être déverrouillé, les ressorts de rappel 9 rabattant systématiquement les doigts de verrouillage 3 sur les griffes de maintien 13 et 15 de la caméra. C'est seulement la combinaison du coulissement des équerres et du retrait de la caméra par rapport à la semelle qui rend le déverrouillage effectif. Ainsi, il est impossible de déverrouiller le système caméra-trépied si la caméra n'est pas retirée du support solidaire du trépied. Cela augmente encore la sécurité de l'ensemble. D'autre part, aucune pièce n'est saillante hors de la semelle, cela évite tout accrochage avec des objets ou des personnes en mouvement autour de l'ensemble caméra-trépied.

Le dispositif de fixation selon l'invention s'applique à tous les types d'appareils et de supports fixes ou mobiles et en particulier à une caméra portable ou à des projecteurs qui peuvent être fixée, par exemple sur des murs ou des plafonds de studio.

## Revendications

1. Dispositif de fixation d'un appareil sur un support, ledit dispositif comprenant une semelle (1) fixée au support, deux doigts de verrouillage (3) et deux poussoirs (5) permettant de déclencher la fixation de l'appareil sur le support par l'intermédiaire des doigts de verrouillage (3), caractérisé en ce que chacun des deux poussoirs (5) est un pion cylindrique de section circulaire monté sur ressort (10), comportant au moins deux diamètres différents (d1, d3) et dont la génératrice est perpendiculaire au plan de la semelle (1).

2. Dispositif selon la revendication 1, caractérisé en ce que les deux doigts de verrouillage (3) sont fixés chacun sur deux pièces intermédiaires (7) reliées entre elles par deux tringles (8) montées sur un ressort (9).

3. Dispositif selon la revendication 2, caractérisé en ce qu'il comprend des moyens (2, 6) permettant le centrage et le calage horizontal et latéral de l'appareil.

4. Dispositif selon l'une quelconque des revendications précédentes, caractérisé en ce qu'il comprend une troisième tringle (16) sur laquelle est fixée une première prise (17) et une deuxième prise (18) fixée à la semelle (1).

## Patentansprüche

1. Vorrichtung zum Befestigen eines Gerätes auf einer Auflage mit einer an der Auflage befestigten Grundplatte (1), mit zwei Verriegelungsfingern (3) und zwei Druckknöpfen (5) zum Auslösen der Befestigung des Gerätes auf der Auflage mittels der Verriegelungsfinger (3),
dadurch gekennzeichnet, daß jeder der beiden Druckknöpfe (5) durch einen durch eine Feder (10) belasteten zylindrischen Stößel mit kreisförmigem Querschnitt gebildet ist, der wenigstens zwei unterschiedliche Durchmesser (d1, d3) aufweist und dessen Mantelfläche senkrecht zu der Ebene der Grundplatte (1) steht.

2. Vorrichtung nach Anspruch 1, dadurch gekennzeichnet, daß die beiden Verriegelungsfinger (3) auf zwei Zwischenteilen (7) befestigt sind, die über zwei auf einer Feder (9) montierten Stangen (8) miteinander verbunden sind.

3. Vorrichtung nach Anspruch 2, dadurch gekennzeichnet, daß Mittel (2, 6) vorgesehen sind, die die Zentrierung und die horizontale und seitliche Einstellung des Gerätes ermöglichen.

4. Vorrichtung nach einem der vorangehenden Ansprüche, dadurch gekennzeichnet, daß eine dritte Stange (16) mit einem darauf befestigten ersten Knopf (17) und ein an der Grundplatte (1) befestigter zweiter Knopf (18) vorgesehen sind.

## Claims

1. Device for securing a piece of apparatus to a support, the said device comprising a sole plate (1) secured to the support, two latching fingers (3) and two push-buttons (5) for enabling the securing of the apparatus to the support by means of the latching fingers (3), characterized in that each of the two push-buttons (5) is a cylindrical peg of circular cross section mounted on a spring (10), having at least two different diameters (d1, d3) and the generatrix of which is perpendicular to the plane of the sole plate (1).

2. Device according to Claim 1, characterized in that the two latching fingers (3) are each secured to one of two intermediate parts (7) connected to one another by two linkages (8) mounted on a spring (9).

3. Device according to Claim 2, characterized in that it comprises means (2, 6) allowing the apparatus to be centred and held in place horizontally and laterally.

4. Device according to any one of the preceding claims, characterized in that it comprises a third linkage (16) to which a first grip (17) is secured and a second grip (18) secured to the sole plate (1).
